Europäisches Patentamt

European Patent Office

Office européen des brevets

(11) Veröffentlichungsnummer: **0 303 013**
**A2**

(12) **EUROPÄISCHE PATENTANMELDUNG**

(21) Anmeldenummer: **88108980.9**

(22) Anmeldetag: **03.06.88**

(51) Int. Cl.⁴ **G02C 1/06**

(30) Priorität: **13.08.87 DE 8711033 U**

(43) Veröffentlichungstag der Anmeldung:
**15.02.89 Patentblatt 89/07**

(84) Benannte Vertragsstaaten:
**AT DE FR GB IT NL**

(71) Anmelder: **POLAROID CORPORATION**
**549 Technology Square**
**Cambridge, Massachusetts 02139(US)**

(72) Erfinder: **Weber, Karl**
**Steinäcker 41g**
**D-7000 Stuttgart 75(DE)**

(74) Vertreter: **Koch, Günther, Dipl.-Ing. et al**
**Postfach 920**
**D-8000 München 33(DE)**

(54) **Brill mit auswechselbarem durchgehendem Glas.**

(57) Bei einer Brille mit auswechselbarem durchgehendem Glas und einem geschlossenen Rahmen ist an den unteren Bügeln des Rahmens (1) ein Klemmrahmen (21) begestigt, der im wesentlichen die gleiche Ausbildung wie der Rahmen (1) der oberen Querbügel und Seitenbügel aufweist und in einer zwischen sich und dem Rahmen das Glas austauschbar sichernden Stellung durch ein Schloß (40) arretierbar ist.

## FIG.1

EP 0 303 013 A2

## Brille mit auswechselbarem durchgehendem Glas

Die Erfindung betrifft eine Brille mit auswechselbarem durchgehendem Glas und einem geschlossenen Rahmen, der durch einen oberen Querbügel, zwei sich daran anschließende Seitenbügel sowie zwei untere Bügel, die über einen Nasenbügel miteinander verbunden sind, gebildet wird.

Es ist Aufgabe der Erfindung, eine Brille dieser Art derart weiterzubilden, daß das durchgehend einteilig ausgebildete Glas in besonders einfacher Weise bei gleichzeitig gutem Sitz austauschbar ist.

Erfindungsgemäß wird diese Aufgabe dadurch gelöst, daß an den unteren Bügeln des Rahmens ein Klemmrahmen befestigt ist, der im wesentlichen in gleicher Ausbildung wie der Rahmen einen oberen Querbügel und Seitenbügel aufweist und in einer zwischen sich und dem Rahmen das Glas austauschbar sichernden Stellung durch ein Schloß arretierbar ist.

Vorteilhafte Weiterbildungen sind in den Unteransprüchen definiert.

Die Erfindung wird im folgenden anhand eines Ausführungsbeispiels beschrieben. In den Zeichnungen stellen dar:

Fig. 1 eine Ansicht perspektivisch von oben eines Ausführungsbeispiels (ohne Glas),

Fig. 2 das zu dem Ausführungsbeispiel nach Fig. 1 gehörende Glas,

Fig. 3 einen Schnitt entlang der Linie III-III in Fig. 1,

Fig. 4 einen Schnitt entlang der Linie IV-IV in Fig. 1,

Fig. 5 einen Schnitt entlang der Linie V-V in Fig. 1,

Fig. 6 den Rahmen 1 (in Fig. 1),

Fig. 7 den Klemmrahmen 21 (in Fig. 1).

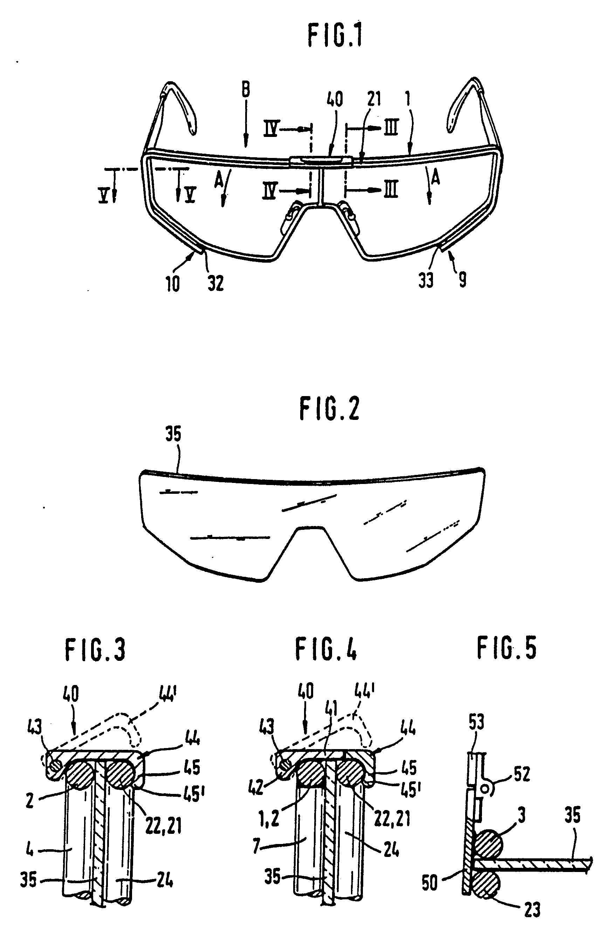

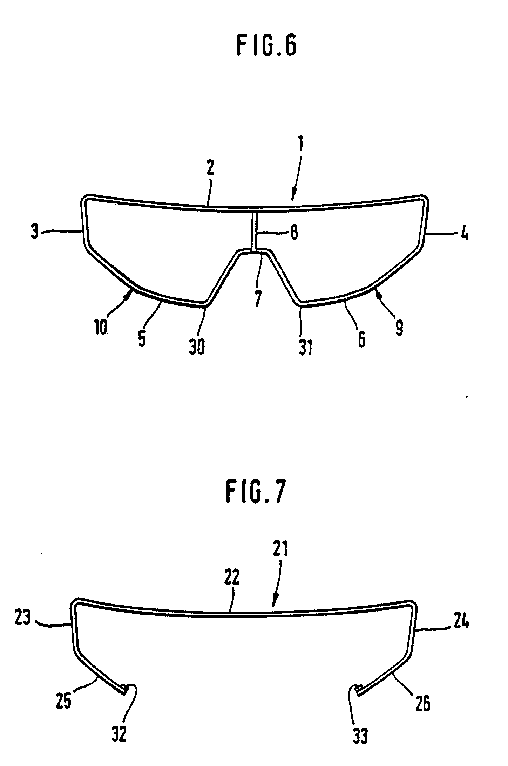

Die Brille weist einen Rahmen 1 auf (vgl. Fig. 1, Fig. 6), bestehend aus oberem Querbügel 2, zwei Seitenbügeln 3, 4, zwei unteren Bügeln 5, 6, einem Nasenbügel 7 sowie einem Verbindungsstück 8, welches Nasenbügel 7 und oberen Querbügel 2 verbindet.

An diesem Rahmen 1 ist an den Stellen 9, 10 ein Klemmrahmen 21 (vgl. Fig. 1, Fig. 7) angebracht, der durch einen oberen Querbügel 22, Seitenbügel 23, 24 und untere Bügel 25, 26 gebildet wird. Die Form der oberen Bügel 2 und 22 sowie der Seitenbügel 3, 4 und 23, 24 ist identisch. Die unteren Bügel 25, 26 des Klemmrahmens 21 allerdings weichen in ihrer Form von den unteren Bügeln 5, 6 des Rahmens 1 ab, und zwar derart, daß sie sich nicht bis zur tiefsten Stelle 30 bzw. 31 der unteren Bügel 5, 6 hin erstrecken, sondern etwas oberhalb aufhören. Mit den Enden der unteren Bügel 25, 26 ist der Klemmrahmen 21 am Rahmen 1 befestigt, und zwar mittels kleiner Klötzchen 32, 33, in denen die Enden der unteren Bügel 25, 26 verlötet sind und die ihrerseits wieder auf den Rahmen 1 an der gezeigten Stelle aufgelötet sind.

Zwischen Rahmen 1 und Klemmrahmen 21 wird ein durchgehendes Glas 35 eingesetzt (vgl. Fig. 2).

Der Rahmen 1 und der Klemmrahmen 21 werden durch ein Schloß 40 zusammengehalten, dessen Einzelheiten in Fig. 3 und 4 dargestellt sind. Wie aus Fig. 4 zu ersehen, weist das Schloß 40 eine obere Anschlagplatte 41 auf, die mit dem oberen Querbügel 2 des Rahmens 1 fest verlötet ist. An diese obere Anschlagplatte 41 stößt von unten das Glas 35 und wird dadurch gegen ein Verrutschen nach oben gehalten. Die obere Anschlagplatte 41 weist auf ihrer Rückseite, mit ihr einteilig ausgebildet, einen Falz 42 auf, der von einer kleinen Achse 43 durchsetzt wird. Mit der Achse 43 verbunden ist ein U-förmiger Klemmbügel 44. Falz 42, Achse 43 und Klemmbügel 44 bilden also ein Scharnier, das an dem oberen Querbügel 2 des Rahmens 1 angebracht ist und dessen beweglicher Teil, nämlich der U-förmige Klemmbügel 44, dazu dient, den Klemmrahmen 21 fest in Richtung auf den Rahmen 1 hin anzudrücken. Die Stellung, in der dies erfolgt, ist in den Fig. 3 und 4 als Normalstellung eingezeichnet. Wenn der U-förmige Klemmbügel 44 in die gestrichelt eingezeichnete Position 44' hochgeklappt wird, dann kann der Klemmrahmen 21 infolge seiner Eigenelastizität (er ist zu diesem Zweck aus Kupfer-Beryllium hergestellt) und des langen Weges bis zu den Stellen 9, 10 seiner Befestigung vom Rahmen 1 so weit in Richtung der Pfeile A (Fig. 1) weggebogen werden, daß man von oben bequem an der oberen Anschlagplatte 41 vorbei das Glas 35 einsetzen kann, wie durch den Pfeil B angedeutet. Dann läßt man den Klemmrahmen 21 sich wieder an das Glas 35 anlegen und führt den U-förmigen Klemmbügel 44 in die in den Fig. 3 und 4 gezeigte Stellung, in der der vordere Steg 45 des Klemmbügels 44 den oberen Querbügel 22 an das Glas 35 und damit auch, mit dem Glas 35, gegen den oberen Querbügel 2 des Rahmens 1 drückt. Um eine sichere Arretierung zu gewährleisten, ist die Innenseite des vorderen Stegs 45 in der dargestellten Art und Weise etwas gerundet ausgebildet, oder, anders ausgedrückt: das im Querschnitt untere Ende des vorderen Stegs 45 weist eine kleine nach innen hervorstehende Nase 45' auf, die verhindert, daß der Klemmbügel 44 sich von selbst löst und nach oben aufgeht.

Die Halterung des Glases 35 nach beiden Seiten hin und nach unten wird durch die Klötzchen 32, 33 besorgt. Sie stellen eine seitliche, quasi "selbstzentrierende" Halterung dar, da sie etwas oberhalb der tiefsten Stellen 30, 31 der unteren Bügel 5, 6 des Rahmens 1 angeordnet sind. Eine seitliche Halterung wird ferner, wie aus Fig. 5 zu ersehen, durch die Seitenteile 50, 51 besorgt, die an die Seitenbügel 3, 4 angelötet sind und diese nach vorne etwas überragen, damit sie in der geschilderten Weise einen Anschlag in seitlicher Richtung für das Glas 35 bilden. An den Seitenteilen 50, 51 sind mittels Scharnieren 52 die Ohrbügel 53 angelenkt.

Von Bedeutung ist, daß der Klemmrahmen 21 die in Fig. 7 dargestellte großräumige Ausdehnung hat, so daß die Verbindung mit dem eigentlichen Rahmen 1 der Brille über die Klötzchen 32, 33 zwar einerseits außerordentlich stabil ausgeführt werden kann, aber dennoch dem oberen Querbügel 22 des Klemmrahmens 21 genügend federnden Spielraum läßt, um dazwischen das Glas 35 einschieben zu können: Bei eingeschobenem Glas 35 wird dann der Klemmrahmen 21 durch das Schloß 40 am Rahmen 21 gesichert.

**Ansprüche**

1. Brille mit auswechselbarem durchgehendem Glas und einem geschlossenen Rahmen (1), der durch einen oberen Querbügel (2), zwei sich daran anschließende Seitenbügel (3, 4) sowie zwei untere Bügel (5, 6), die über einen Naselbügel (7) miteinander verbunden sind, gebildet wird, **dadurch gekennzeichnet,**
daß an den unteren Bügeln (5, 6) des Rahmens (1) ein Klemmrahmen (21) befestigt ist, der im wesentlichen in gleicher Ausbildung wie der Rahmen (1) einen oberen Querbügel (22) und Seitenbügel (23, 24) aufweist, und in einer zwischen sich (21) und dem Rahmen (1) das Glas (35) austauschbar sichernden Stellung durch ein Schloß (40) arretierbar ist.

2. Brille nach Anspruch 1, **dadurch gekennzeichnet,** daß die Befestigung des Klemmrahmens (21) an den unteren Bügeln (5, 6) des Rahmens (1) etwas seitlich oberhalb der tiefsten Stellen (30, 31) mittels Klötzchen (32, 33) erfolgt, die seitliche Zentrieranschläge für das Glas (35) in der arretierten Position des Klemmrahmens (21) bilden.

3. Brille nach Anspruch 1, **dadurch gekennzeichnet,** daß das Schloß eine obere Anschlagplatte (41), für das Glas (35) in der arretierten Stellung aufweist und daß an der oberen Anschlagplatte (41) ein Klemmbügel (44) angelenkt ist, der in der Stellung, in der der Klemmrahmen (21) arretiert ist, den oberen Querbügel (22) des Klemmrahmens (21) lösbar umgreift.

4. Brille nach Anspruch 1 oder einem der folgenden, **dadurch gekennzeichnet,** daß an den Seitenteilen (3, 4) über dieselben hervorstehende Seitenteile (50, 51) angebracht sind, die seitliche Anschläge für das Glas (35) bilden, und daß an diese Seitenteile (50, 51) mittels Scharnieren (52) die oberen Bügel (53) angelenkt sind.

## FIG.1

## FIG.2

## FIG.3

## FIG.4

## FIG.5

## FIG.6

## FIG.7